# EUROPÄISCHE PATENTSCHRIFT

(11) **EP 0 517 332 B1**
(45) Veröffentlichungstag und Bekanntmachung des Hinweises auf die Patenterteilung: **21.08.1996**
(21) Anmeldenummer: 92201598.7
(22) Anmeldetag: 22.05.1992
(51) Int. Cl.: B60N 2/22

(54) **Gelenkbeschlag für Sitze mit neigungsverstellbarer Rückenlehne, insbesondere für Kraftfahrzeuge**
Hinge fitting for seats with reclining backrests, particularly for motor vehicles
Ferrure d'articulation pour sièges à dossier réglable en inclinaison, en particulier pour véhicules automobiles

(30) Priorität: 28.05.1991 DE 4117497
(43) Veröffentlichungstag der Anmeldung: 09.12.1992
(73) Patentinhaber: NAUE/ JOHNSON CONTROLS ENGINEERING VERWALTUNGS GmbH, D-42929 Wermelskirchen (DE)
(72) Erfinder: Schmale, Gerhard, W-5609 Hückeswagen (DE); Hoge, Ralf, W-5608 Radevormwald (DE); Zynda, Martin, W-5630 Remscheid 11 (DE)
(74) Vertreter: Bergen, Klaus, Dipl.-Ing.

(56) Entgegenhaltungen:
- DE-A- 1 680 128
- DE-A- 2 834 492
- DE-A- 3 244 399
- FR-A- 2 536 816
- FR-A- 2 627 437

## Beschreibung

### Technisches Gebiet

Es sind Gelenkbeschläge für Sitze, insbesondere für Kraftfahrzeuge, mit neigungsverstellbarer Rückenlehne bekannt, bei denen jeweils am Sitz ein außenanliegender Beschlag durch ein Exzenter-Planetengetriebe schwenk-, verstell- und durch Selbsthemmung festsetzbar gelagert ist.

### Stand der Technik

Bei einem Gelenkbeschlag dieser Art nach der DE-A-1 680 128 ist vorgesehen, daß sowohl der Steg der Lagerung mit dem Innenzahnkranz des Gelenkteils als auch das Stirnrad mit seinem zugehörigen Gelenkteil in jeweils einstückiger Ausführung in einem kombinierten Feinstanz- und Fließpreßverfahren erzeugt sind, wobei die Zahnbreiten entsprechend dem Maß der Ausdrückung geringer sind als die Materialstärken der Gelenkteile. Diese Differenz beträgt gemäß den nach dieser Erfindung gelieferten Einrichtungen sowie nach den Darstellungen in der Zeichnung, etwa 30 %. Nachteilig ist hierbei diese um 30 % zur Ausgangsmaterialstärke verringerte Zahnbreite sowie die auf den Gegenseiten der benutzten Verzahnungen ebenfalls als entsprechende, versetzt ausgeprägte Verzahnungen schroff ausgebildete Konturen, die somit sehr stark wechselnde Querschnittsveränderungen aufweisen, und hierdurch im Bereich ihrer Anschlüsse schädliche Spannungsspitzen einleiten, so daß zur Erreichung ausreichender Stabilität solcher Gelenkbeschläge aus diesen Gründen stärkeres Ausgangsmaterial verwendet werden muß, als es den Beanspruchungen, denen diese Gelenkteile ausgesetzt sind, bei zweckmäßigerer Gestaltung entspricht. Dies ist, insbesondere im Fahrzeugbau, aus Gewichts- und Kostengründen unerwünscht.

Um diesen Übelständen entgegenzuwirken, schlägt die bekannte DE-A-28 34 492 vor, bei den ebenfalls durch Fließpressen erzeugten Gelenkteilen deren Innenseiten der Ausdrückungen mit den Außenseiten des Gelenkteiles in eine Ebene zu legen, also Zahnbreite gleich Ausgangsmaterialstärke auszuführen und die Verbindung beider Partien nur durch dünne Wandbrücken herzustellen, die an den nicht als Wälzkörper verwendeten Seiten der Beschläge die dort vorhandenen voll ausgeprägten hohen Zahnprofile umlaufen, wobei durch letztere infolge dieser Gestaltung extrem hohe, zusätzliche Biegespannungen eingeleitet werden. Ungünstig ist hierbei, daß diese verhältnismäßig kleinen, überwiegend senkrecht zur Achse liegenden, auf Biegung und Schub belasteten Wandbrücken infolge der geringen Querschnitte hohe Spannungen erfahren, die zudem durch ihre ungünstige Anordnung zur Belastungsrichtung bei stark unterschiedlichem Verlauf hohe Spannungsspitzen einleiten. Dadurch wird in Zusammenhang mit den hohen Biegebeanspruchungen und den, durch die schroffen Querschnittsübergänge eingeleiteten Kerbwirkungen die Belastbarkeit weiter gemildert, da auch Anrisse entstehen und oft ein Ausreißen eintritt, so daß die erforderliche Bruchsicherheit hohen Belastungen gegenüber nicht gewährleistet ist. Durch diese negativen Einflüsse der dünnen und nach außen verhältnismäßig langen Wandbrücken wird die Haltbarkeit bei Überbelastung im sogenannten Crashfall, dieser hier vorgeschlagenen Gelenkbeschläge wesentlich verkleinert.

Außerdem ist es aus fertigungstechnischen Gründen durch Einflüsse wie Dickenabweichungen und unterschiedliche Härten des Ausgangsmaterials, Maschineneinstellungen, Werkzeugtoleranzen und -verschleiß problematisch, bei den tragenden, gering dimensionierten Querschnitten auf eine sehr hohe Genauigkeit angewiesen zu sein, wie es bei diesem Vorschlag der Fall ist. Bei einer nur einige Zehntelmillimeter tieferen Eindrückung sind z.B. die Wandbrücken zu dünn bzw. bereits stellenweise durchstoßen, da diese dünnen Stellen vorzeitig einreißen.

Auch bei dem bekannten Vorschlag gemäß der DE-A-32 44 399 liegen für die Zahnkörper ebenfalls ungünstige Spannungsverhältnisse vor. Nach der gestellten Aufgabe ist die Zahnbreite der wiederum durch Fließpressen erzeugten, tragenden Elemente im Verhältnis zur Ausgangsmaterialstärke zu verbreitern, wozu die hierfür erforderlichen Materialanteile durch Vergrößern des gegenüberliegend eingedrückten Verzahnungsbereiches zur Verfügung gestellt werden. Hierdurch wird aber das Biegemoment unter Last für die Zähne vergrößert, und da der Zahnfuß nicht im gleichen Maß verbreitert angebunden ist, werden somit die Spannungen bei Belastung erhöht. Im Zusammenwirken mit den auch hier durch die tiefen Verzahnungen auf der Gegenseite der benutzten Verzahnung vorliegenden abwechselnden schroffen Querschnittsverläufen auftretenden hohen Biegespannungen sowie auch durch eingeleitete Kerbwirkungen, werden in der Zahnanbindung eng begrenzte Bereiche mit unverhältnismäßig hohen, vorzeitige Brüche einleitenden Spannungsspitzen gebildet, so daß auch Getriebe nach diesem Vorschlag nicht befriedigen können.

Exzenter-Planetengetriebe nach der DE-A-28 34 492 und DE-A-32 44 399 konnten daher in der Praxis keinen Eingang finden.

### Darstellung der Erfindung

Der im Anspruch 1 angegebenen Erfindung liegt das Problem zugrunde, Gelenkbeschläge der eingangs erwähnen Art, ausgerüstet mit einem Exzenterplanetengetriebe, deren Verzahnungskörper durch Kaltfließpressen erzeugt sind, zu schaffen, bei denen die Belastbarkeit, insbesondere im Hinblick auf den Crashfall, durch eine gute Anbindung der Zähne bei einer insbesondere in den gefährdeten Partien starke Querschnittsunterschiede sowie schroffe Übergänge und somit Spannungsspitzen vermeidender Gestaltung, im Verhältnis zu den bekannten Ausführungen, bei Beibehaltung etwa ihres Gewichts, der Abmessungen sowie des Herstellungsaufwandes, wesentlich erhöht ist, wozu es, auf die Breite bezogen, erforderlich ist, daß stets gute seitliche Eingriffsverhältnisse der Verzahnungen auch im Überlastungsfall gesichert sind und ein hoher Bedienungskomfort sowie eine gute Funktionssicherheit vorliegt.

Die mit der Erfindung erzielten Vorteile bestehen insbesondere darin, daß dadurch die Zähne der Ritzel und die der Innenzahnkränze jeweils zusätzlich zu dem vollen Anschluß am Zahnfuß seitlich durch materialstarke, geschlossene, kreisringförmige und auch anschließende konusringförmige Materialbereiche sicher angehangen, bzw. abgestützt sind, wobei gegenüberliegend zu den Verzahnungen keine schroffen und/oder nur geringe Querschnittsveränderungen vorliegen, die zusätzlich mit allmählichen Übergängen versehen sind, so daß eine hohe Belastbarkeit dieser Teile erreicht ist. Hierzu trägt weiter bei, daß die Lagerungs- und Führungsverhältnisse dieser Wälzkörper auf ihrer Schwenkachse und zueinander gegen seitliches Kippen verbessert sind. Hierdurch werden im Gegensatz zu den bekannten Ausführungen dieser Art die auftretenden unterschiedlichen Spannungen wesentlich verringert und ein gleichmäßiger Verlauf derselben erreicht, womit besonders gefährliche, weil vorzeitige Brüche einleitende hohe Spannungsspitzen vermieden sind. Außerdem wird durch die vorliegenden verhältnismäßig niedrigeren und gleichmäßigeren Biegespannungen auch zusätzlich einem seitlichen Abgleiten der Verzahnungen voneinander entgegengewirkt, wodurch insgesamt günstige Belastungs- und Eingriffs- sowie Flächenpreßverhältnisse vorliegen, so daß besonders im Crashfall, lediglich bleibende Verformungen eintreten, aber Brüchen bei den tragenden Teilen weitgehend vorgebeugt und für den Normalbetrieb ein gleichmäßiger, reibungsfreier Lauf, der eine leichte, bequeme Bedienung und hohe Betriebssicherheit bietet, erreicht ist. Die als Ronden im Fließpreßverfahren gefertigten Zahnkörper weisen durch ihre symmetrische Form auch nach einer Härtung bzw. Vergütung eine hohe Rundlauf- und Plangenauigkeit auf, sie selbst können durch ihre Verbindung mit den wesentlich größeren, aber entsprechend dünnwandigeren Anschlußgelenkteilen stärker ausgeführt werden, ohne den Gesamtmaterialeinsatz zu vergrößern. Sie weisen daher eine hohe Wirtschaftlichkeit auf. Außerdem sind sie günstig mit mehreren unterschiedlichen Anschlußgelenkteilen zu kombinieren, so daß diese stets gleichen Ronden bei mehreren Anwendungsfällen in entsprechend großen Stückzahlen zu fertigen sind und somit Werkzeugkosten eingespart werden, wodurch ihre Wirtschaftlichkeit noch weiter steigt.

Vorteilhafte Ausgestaltungen der erfinderischen Merkmale sind durch die Ansprüche gekennzeichnet.

### Kurze Beschreibung der Zeichnung

Ausführungsbeispiele der Erfindung sind in der Zeichnung dargestellt, sie werden im folgenden näher beschrieben, es zeigen
- Fig. 1: einen kompletten Sitz für Kraftfahrzeuge mit Rückenlehne, die mittels dem erfindungsgemäßen Gelenkbeschlag neigungsverstellbar ist, in perspektivischer Darstellung,
- Fig. 2: einen Längsschnitt gemäß der Linie A-B nach Fig. 1 durch einen erfindungsgemäßen Gelenkbeschlag, bei dem sowohl das Ritzel als auch der Innenzahnkranz als Ronde ausgebildet ist, in vergrößertem Maßstab,
- Fig. 3: eine Seitenansicht zur Fig. 2,
- Fig. 4: ein loses, als Ronde ausgebildetes Ritzel, wie in Fig. 2 verwendet, in vergrößertem Maßstab,
- Fig. 5: einen losen, als Ronde ausgebildeten Innenzahnkranz, wie in Fig. 2 verwendet, in vergrößertem Maßstab,
- Fig. 6: eine Teilansicht in Pfeilrichtung Z nach Fig. 4,
- Fig. 7: eine weitere Variante gemäß Einzelheit Y nach Fig. 4, vergrößert dargestellt,
- Fig. 8: eine weitere Variante gemäß Einzelheit X nach Fig. 5, vergrößert dargestellt,
- Fig. 9: einen Längsschnitt durch einen Gelenkbeschlag, bei dem sowohl das Ritzel als auch der Innenzahnkranz einstückig mit ihren Gelenkteilen ausgebildet sind,
- Fig. 10: eine Einzelheit Y nach Fig. 4, jedoch als weitere Ausführungsvariante,
- Fig. 11: eine Teilansicht in Pfeilrichtung W nach Fig. 10,
- Fig. 12: eine Schnittdarstellung gemäß der Linie C-D nach Fig. 11, als Abwicklung dargestellt,
- Fig. 13: eine Schnittdarstellung gemäß der Linie E-F nach Fig. 11,
- Fig. 14: wie Fig. 7, jedoch als weitere Ausführungsvariante,
- Fig. 15: eine Ansicht in Pfeilrichtung V nach Fig. 14,
- Fig. 16: wie Fig. 7, jedoch als weitere Ausführungsvariante,
- Fig. 17: eine Ansicht in Pfeilrichtung U nach Fig. 16,
- Fig. 18: wie Fig. 7, jedoch als weitere Ausführungsvariante,
- Fig. 19: eine Teilschnittdarstellung entsprechend Fig. 2, jedoch mit auseinandergesetzten Lagerungsbereichen von Ritzel und Innenzahnkranz.

### Wege zur Ausführung der Erfindung

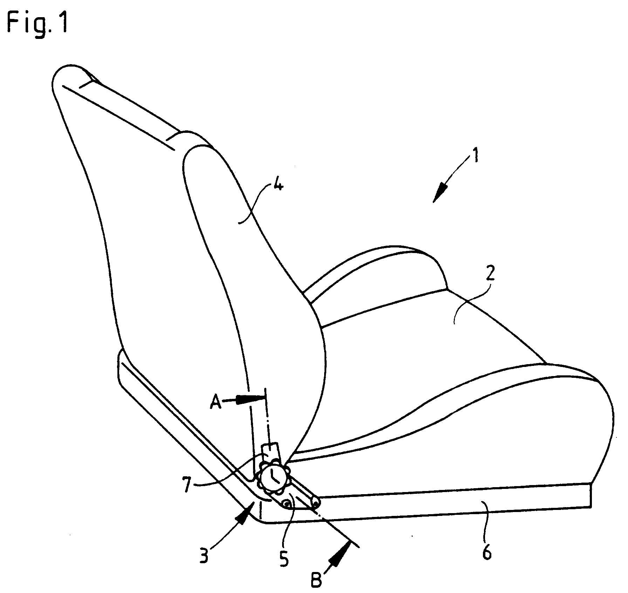

Ein Fahrzeugsitz 1, wie ihn die Fig. 1 zeigt, weist einen Sitzteil 2 und eine an ihm meist über beidseitig vorgesehene Gelenkbeschläge 3 schwenk- und festsetzbar angeordnete Rückenlehne 4 auf. Hierbei ist ein am Sitzteil 2 angebrachtes festes Gelenkteil 5 an einen Rahmen 6 des ersteren, meist durch Verschrauben befestigt, wogegen ein schwenkbares Gelenkteil 7 am Rahmen der Rückenlehne 4 durch Anschraubung, Nietung bzw. Anschweißen angeordnet ist.

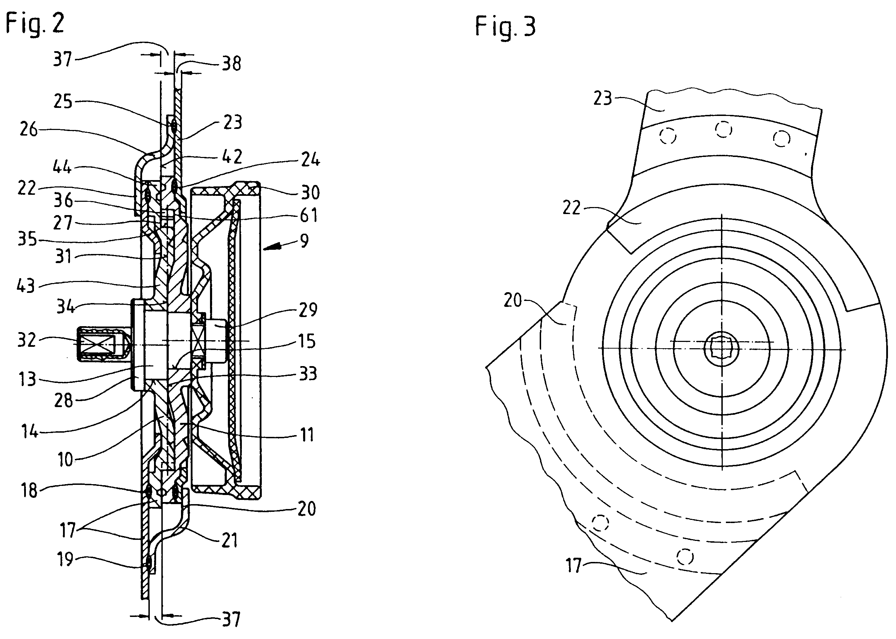

Ein durch Fließpressen erzeugtes Ritzel 10 und ein gleichermaßen gefertigter Innenzahnkranz 11 eines ein Exzenter-Planetengetriebe aufweisenden Gelenkbeschlages 9 nach den Fig. 2 und 3 sind als Ronden ausgebildet und lagern in bekannter Weise auf einer Schwenkachse 13, und zwar das Ritzel 10 auf einem Exzenterlagerbereich 14 und der Innenzahnkranz 11 auf einem zentrischen Lagerbereich 15. Die Zähnezahl des Ritzels 10 ist um einen Zahn geringer als die des Innenzahnkranzes 11 und hierdurch der Kopfkreis des Ritzels 10 um die Zahnhöhe kleiner als der Fußkreis des Innenzahnkranzes 11, wobei das Maß der Exzentrizität des Exzenterlagerbereiches 14 etwa diesem Unterschied entspricht und hierdurch Selbsthemmung zwischen dem Ritzel 10 und dem Innenzahnkranz 11 besteht, wie es bekannt ist.

Mit dem Ritzel 10 ist mittels eines Anschlußbereiches 44 ein dem festen Gelenkteil 5 nach Fig. 1 entsprechendes festes Gelenkteil 17 nach Fig. 2 und 3 durch Widerstandsschweißung 18 verbunden und mit letzterem ebenfalls mittels Widerstandsschweißung 19 ein den Innenzahnkranz 11 mit seinem schwenkbaren Gelenkteil 23 mittels einem Segmentbereich 20 mit Lagerspiel umfassendes und damit axial haltendes Führungsblech 21. Mit dem Innenzahnkranz 11 ist dieses schwenkbare Gelenkteil 23, entsprechend dem schwenkbaren Gelenkteil 7 nach Fig. 1, durch Widerstandsschweißung 24 ebenfalls mittels eines Anschlußbereiches 57 verbunden und an ihm über eine Widerstandsschweißung 25 ein das Ritzel 10 über den festen Gelenkteil 17 in einem Segmentbereich 22 mit Lagerspiel umfassendes und somit haltendes Führungsblech 26 ebenfalls angeschlossen. Hierdurch ist im Zusammenwirken mit dem am Ritzel 10 anliegenden Bund 28 der Schwenkachse 13 und einem am Innenzahnkranz 11 anliegenden, mit der Schwenkachse 13 über eine Schraube 29 befestigten Handrad 30 eine gut wirksame, axiale Lagerung des Ritzels 10 zum Innenzahnkranz 11 gewährleistet, so daß für eine seitliche übereinstimmende Überdeckung einer Außenverzahnung 35 des Ritzels 10 und einer Innenverzahnung 36 des Innenzahnkranzes 11 gute Voraussetzungen vorliegen.

Über ein Kupplungsstück 32 der Schwenkachse 13 wird mittels einer nicht dargestellten Steckwelle die über das Handrad 30 eingeleitete Drehbewegung auf den anderseitigen Gelenkbeschlag des Fahrzeugsitzes 1 übertragen.

Eine Lagerstirnfläche 33 des Ritzels 10 und eine hieran anliegende Lagerstirnfläche 34 des Innenzahnkranzes 11 liegen auf einer Mitte 31 der Außenverzahnung 35 des Ritzels 10 und der Innenverzahnung 36 des Innenzahnkranzes 11, so daß die bei der Belastung des Exzenter-Planetengetriebes auf das Ritzel 10 und den Innenzahnkranz 11 auftretenden Zahndrücke jeweils nur ein gleich großes, geringes sich gegenseitig aufhebendes Kippmoment zur Schwenkachse 13 in bezug auf die Lagerungsverhältnisse ausüben, wodurch sich die Winkellage der Schwenkachse 13 innerhalb des Exzenter-Planetengetriebes unter Belastung nur sehr wenig ändert, was sich ergänzend auf die seitlichen vollen Eingriffsverhältnisse der Verzahnungen 35 und 36 stets günstig auswirkt.

Anstelle der gewählten Widerstandsschweißungen 18, 19, 24 und 25 können, ohne die Erfindung zu verlassen, auch andere bekannte Verbindungsarten, wie z.B. Lichtbogenfensterschweißung, Vernietungen und dgl., angewandt werden, ebenso können die Führungsbleche 21 bzw. 26 durch am festen Gelenkteil 17 bzw. schwenkbarem Gelenkteil 23 angeordnete und am schwenbaren Gelenkteil 23 bzw. am festen Gelenkteil 17 axial anliegende Bundschrauben ersetzt werden, wie es später noch beschrieben ist.

Die Herstellung der Verzahnungskörper 10 und 11 als Ronden bietet durch ihre symmetrische Gestaltung den Vorteil, als besonders rund- und plangenaue Teile spanlos erzeugt werden zu können, was zudem bei der oft verlangten Härtung bzw. Vergütung im Gegensatz zu den einstückig mit den Anschlußplatten hergestellten Beschlägen, nicht in diesem Maß der Fall ist, wodurch sich die Funktion und Bedienungsweise hiermit ausgerüsteter Gelenkbeschläge 3 mit Exzenter-Planetengetriebe sehr leichtgängig mit gleichmäßigem Lauf stellt. Außerdem wirkt sich eine dickere Ausgangsmaterialstärke 37, bzw. z.B. 3,5 mm, der Ritzel 10 und des Innenzahnkranzes 11 im Verhältnis zu der wesentlich dünner wählbaren Materialstärke 38, z.B. 1,8 mm, aber in beachtlich größerer Abmessung auszuführenden Gelenkteile 17, bzw. 23 nicht oder nicht wesentlich erhöhend auf den Gesamtmaterialeinsatz aus, er kann im Gegenteil, je nach der Wahl der Abmessungen und Materialdicken niedriger liegen, so daß, was öfter wünschenswert ist, die Gelenkteile bei Beachtung eines Gewichtslimits auch größer ausgeführt werden können, so daß hierdurch bei Belastung auf den Gelenkbeschlag die Kräfte in ihren Anschlüssen an die in verhältnismäßig dünnen Blechstärken ausgeführten Sitz- und Lehnenrahmen entsprechend kleiner werden und diese Verbindungen somit durch einen harmonischeren Übergang solider ausgeführt sind, womit die Sicherheit des Sitzes gegen Bruch, insbesondere im Crashfall, ohne größeren Materialeinsatz erhöht ist.

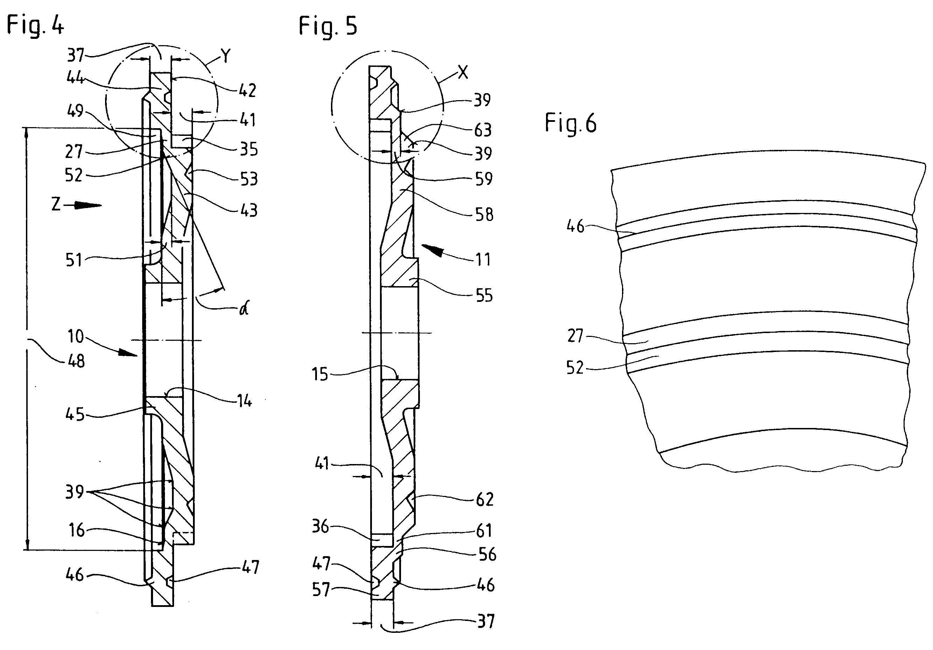

Bei der Ausbildung des Ritzels 10 entspricht eine Zahnbreite 41 der Ausgangsmaterialstärke 37, wobei die Innenkante der Außenverzahnung 35 mit einer äußeren Materialfläche 42 desselben zusammenfällt und somit ein oberer Bereich des Steges 43 zu dem Anschlußbereich 44 des Ritzels 10 um die Ausgangsmaterialstärke 37 eine versetzte Lage einnimmt, wie es die Fig. 4 gut verdeutlicht.

Der Exzenterlagerbereich 14 ist über die Ausgangsmaterialstärke 37 durch eine angeformte Nabe 45 etwa um 60 % zu ihr verbreitert ausgeführt, so daß hierdurch die Lagerungsverhältnisse sowohl in bezug auf die Flächenpressung als auch gegen eine Kippstellung auf der Schwenkachse 13 weiter verbessert sind.

Durch einen herausgedrückten Schweißring 46 mit dreieckigem Querschnitt, wie dargestellt, oder mit wulstartigem Querschnitt wird eine sichere Widerstandsschweißung 18 erreicht. Das Materialvolumen für den Schweißring 46 ist durch Eindrücken einer anderseitigen Ringnute 47 zur Verfügung gestellt.

Auf der der Außenverzahnung 35 entgegengesetzten Seite ist durch den erzeugenden Fließpreßvorgang bei diesem Beispiel ein durchgehender Materialringbereich 27 in einer Stärke 51 von etwa ab 40 % der Ausgangsmaterialstärke 37, beginnend in einem Durchmesser 48, der entsprechend größer als der Kopfkreis der Außenverzahnung 35 ist, erzeugt worden, an den etwa ab der Größe des Fußkreisdurchmessers der Außenverzahnung 35 unter einem Winkel α von etwa 30° ein zur Wand des Steges 43 als einen allmählichen Übergang bildenden und somit einen günstigen Spannungsverlauf schaffenden Konusringbereich 52 anschließt. Dies gilt sowohl für die Zähneanbindung als auch für die Verbindung der Außenverzahnung 35 zum Steg 43 und zum Anschlußbereich 44, wobei Übergänge durch Abrundungen 39 oder flachwinkelige Fasen 16 der Kanten und Ecken entschärft sind. Die Stärke 51 von etwa 40 % der Ausgangsmaterialstärke 37 kann im Rahmen der Erfindung, je nach den Fertigungs- und Einsatzbedingungen sowie der Materialqualität und -behandlung zwischen einem Wert von 28 bis 50 % und mehr gewählt werden. Die zu dieser Gestaltung sowie für die volle Ausbildung der Zähne benötigten Materialanteile werden sowohl von denen zwischen den durchgedrückten Zähnen der Außenverzahnung 35 auf der Gegenseite vorhandener Partien, also den Zahnlücken, als auch von den Materialanteilen eines eingedrückten, freien Kreisringbereiches 49 mit dem Durchmesser 48 gebildet, der den Kopfkreis der Außenverzahnung 35 überschreitet. Außerdem kann hierzu der Materialanteil, welcher durch Eindrücken einer entsprechenden Ringnut 53, verdrängt wird, wie sie auf der Seite der Verzahnung 36 unterhalb derselben vorgesehen ist, je nach den gewählten Abmessungen der Stärke 51 und des Kreisringbereiches 49 verwendet werden.

Beim Innenzahnkranz 11 gemäß der Fig. 5 ist ebenfalls eine entsprechende, die Lagerung desselben auf der Schwenkachse 13 verbessernde Ausführung der Ausgangsmaterialstärke 37 gegenüber dem verlängerten zentrischen Lagerbereich 15 zu erkennen, indem hier auch eine die Lagerlänge etwa um 60% vergrößernde Nabe 55 durch den Fließpreßvorgang erzeugt ist. Außerdem ist gleichermaßen ein Schweißring 46 für die Widerstandsschweißung 24 ausgebildet. Ein Anschlußbereich 57 mit der anschließenden Innenverzahnung 36 ist hier gleichermaßen um die Zahnbreite 41 gegenüber einem Steg 58 des Innenzahnkranzes 11 um die Ausgangsmaterialbreite 37, versetzt ausgeführt, so daß hier ebenfalls die Zahnbreite 41 der Ausgangsmaterialstärke 37 entspricht. Seitlich im Anschluß an die Innenverzahnung 36 ist, mit etwa dem Kopfkreis der Innenverzahnung 36 im Durchmesser beginnend, ein voll geschlossener Materialringbereich 61 in einer Stärke 59 ab 35 % der Ausgangsmaterialstärke 37 gebildet, so daß zur Übertragung der hohen Kräfte im Crashfall die Innenverzahnung 36 seitlich voll ausreichend angehangen ist. An den Materialringbereich 61 schließt nach außen ein Konusringbereich 56 als allmählicher Übergang zum Anschlußbereich 57 an, und nach innen schließt er gleichermaßen mittels eines Konusringbereiches 63 an den Steg 58 allmählich unter einem Winkel von 30 bis 45° an, wobei alle Kanten der Übergänge mit Abrundungen 39 ausgeführt sein können. Insgesamt ist hierdurch auch beim Innenzahnkranz 11 für die Innenverzahnung 36 sowohl eine solide seitliche Anhängung derselben bei vollem Anschluß der Zahnfüße erreicht als auch, daß günstige Spannungsspitzen vermeidende Übergänge zum Steg 58 und Anschlußbereich 57 vorliegen. Die hierzu erforderlichen Materialanteile ergeben sich aus den zwischen den durchgedrückten Zähnen anderseitig, der Innenverzahnung 36 vorliegenden Partien und dem Materialanteil des Steges 58 außerhalb des Konusringbereiches 63, wobei zusätzlich Materialanteile einer im kleineren Durchmesserbereich der Innenverzahnung 36 auf der ihr entgegengesetzten Seite eingedrückten Ringnute 62 beisteuern.

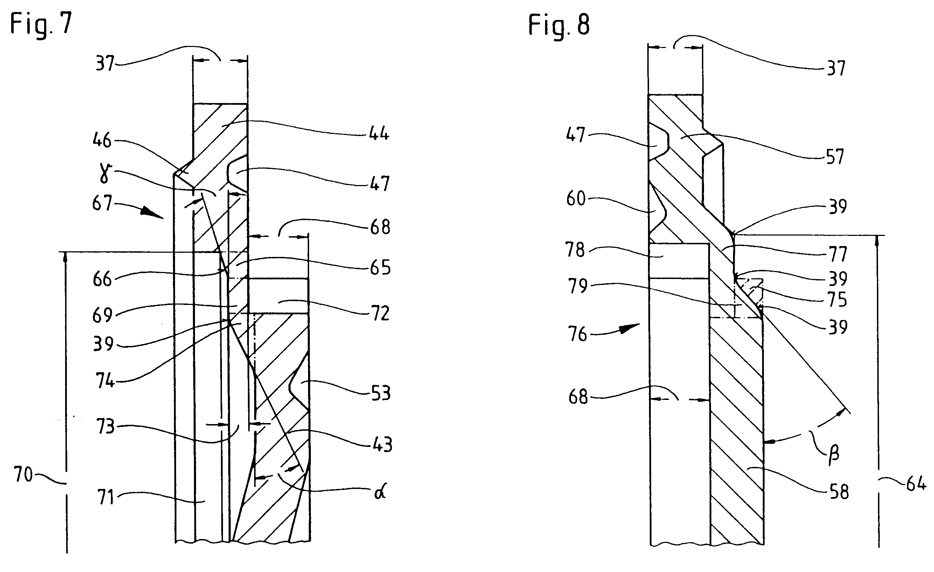

Es kann beim Ritzel 10 und beim Innenzahnkranz 11 auch so vorgegangen werden, daß das Versetzen bzw. Ausprägen ihrer Außen- und Innenverzahnung zu den Anschlußbereichen 44 bzw. 57 bzw. zum Steg 43 etwas größer, als es der Ausgangsmaterialstärke 37 entspricht, ausgeführt wird, um eine vergrößerte Zahnbreite zu erhalten, wie es in den Fig. 7 und 8 verdeutlicht ist.

Bei einem Ritzel 67 gemäß Fig. 7 ist eine Zahnbreite 68 einer Außenverzahnung 72 etwa um 10 % größer ausgeführt, als es der Ausgangsmaterialstärke 37 entspricht. Seitlich zur Außenverzahnung 72 ist ein geschlossener Materialringbereich 69 in einer Stärke 73 ab 36 % der Ausgangsmaterialstärke 37 erzeugt, an den somit die Außenverzahnung 72 auch bei diesem Ausführungsbeispiel solide angebunden ist. Dieser Materialringbereich 69 ist nach innen durch einen Konusringbereich 74 verlängert, der zum Steg 43 als Übergang entsprechend flachwinkelig unter einem Winkel α von etwa 30° ausläuft. Auch nach außen ist der Übergang des Materialringbereiches 69 zum Anschlußbereich 44 wie beim Ritzel 11, allmählich verlaufend, ausgeführt, wie es die flach, schräg nach außen verlaufende Kontur 66 eines Übergangsbereiches 65 zeigt, diese Kontur bildet eine Fase 16 mit dem Winkel γ . Außerdem sind die Kanten und Ecken der Bereiche zu ihren benachbarten ebenfalls mit Abrundungen 39 ausgeführt. Durch diese Ausbildungen liegt auch bei diesem Ritzel 67 eine spannungsausgeglichene Verbindung der Außenverzahnung 72 vor, sowohl zum äußeren Anschlußbereich 44 als auch zum Steg 43, wobei die Zahnfüße auf voller Breite angeschlossen sind. So wird die etwas höhere Biegebelastung durch die vergrößerte Zahnbreite 68 problemlos und spannungsspitzenarm übertragen. Die zu den Bereichen 65, 69 und 74 erforderlichen Materialanteile werden sowohl zusätzlich zu den Anteilen der nicht durchgedrückten Zahnlücken der Außenverzahnung 72, dem freien Kreisringbereich 71, dessen Durchmesser 70 gegenüber der Außenverzahnung 72 größer ist, entnommen bzw. sind je nach Wahl der Abmessungen des Kreisringbereiches 71 und des Konusringbereiches 74, wie bei allen anderen erfinderischen Ausführungsbeispielen, durch Einpressen einer Ringnut 53 unterhalb der Außenverzahnung 71 zur Verfügung gestellt.

Analog liegen die Verhältnisse bei einem zugeordneten Innenzahnkranz 76 nach Fig. 8, bei dem die Zahnbreite 68 einer Innenverzahnung 78 ebenfalls gegenüber der Ausgangsmaterialstärke 37 um 10 % vergrößert ausgeführt und ein entsprechender geschlossener Materialringbereich 77 in einer Stärke 54 ab 35 % der Ausgangsmaterialstärke 37 vorgesehen ist.

An diesen Materialringbereich 77 schließt ein Konusringbereich 79 zum Steg 58 unter einem flachen Winkel β von etwa 30° allmählich an, wobei Abrundungen 39 die Form glätten. Nach außen überschreitet er mit einem Durchmesser 64 den Fußkreisdurchmesser der Innenverzahnung 78. Die zu dieser Gestaltung erforderlichen Materialanteile werden ebenfalls zusätzlich zu den Anteilen der Zahnlücken durch Verdrängen eines strichpunktiert und entsprechend schraffiert eingezeichneten freien Konusringbereiches 75 entnommen, sowie ebenfalls bedarfsweise durch eine Ringnut 60 auf der Seite der Innenverzahnung 78.

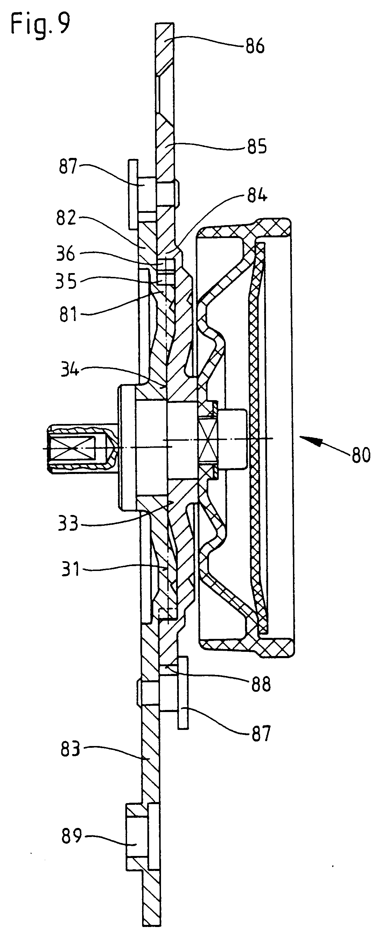

Bei einem in vereinfachter Ausführung gestalteten Gelenkbeschlag 80 gemäß Fig. 9 ist sowohl ein Ritzelbereich 81 mit einer Anschlußplatte 82 zu einem festen Gelenkteil 83 als auch ein Innenzahnkranzbereich 84 mit einer Anschlußplatte 85 zu einem schwenkbaren Gelenkteil 86 jeweils einstückig durch Kaltfließpressen hergestellt, wobei in den Gelenkteilen 83 und 86 die Mitte 31 der Außenverzahnung 35 und der Innenverzahnung 36 wie beim Ausführungsbeispiel nach der Fig. 2 ebenfalls axial in Höhe der gegenseitig anliegenden Lagerstirnflächen 33, 34 beider Gelenkteile liegen. Das feste und schwenkbare Gelenkteil 83 bzw. 86 ist, wie bei den sinngemäß entsprechenden Gelenkteilen 5 und 7 gemäß Fig. 1, jeweils an Sitzteile angeschlossen, wozu die Löcher 89 dienen. Auch die sonstigen erfinderischen Ausgestaltungen sowie die getriebe geometrischen Merkmale dieses Gelenkbeschlages 80 entsprechen sinngemäß denen anderer vorgeschlagener erfinderischer Gelenkbeschläge. Durch zwei oder mehr Führungsbolzen 87 je Gelenkteil als Alternative zu den Führungsblechen 21 bzw. 26, die auf den plananliegenden festen bzw. schwenkbaren Gelenkteilen 83 bzw. 86 mit den Unterseiten ihrer Köpfe mit geringem Spiel bei einem zentrisch verlaufenden Bereich 88 der Anschlußplatten 82 und 85 zur Anlage kommen, ist eine axiale Führung der Teile zueinander unterstützt.

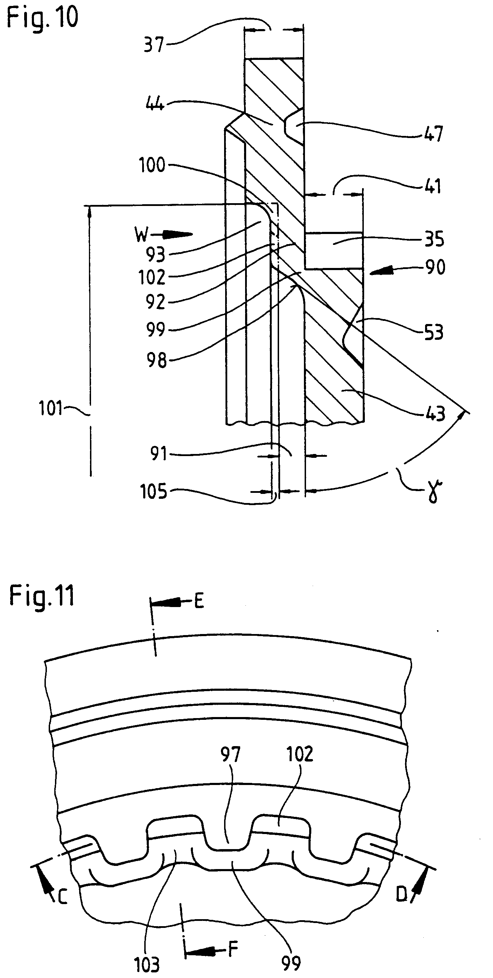

Beim Ausführungsbeispiel eines Ritzels 90 nach den Fig. 10 bis 13, bei dem die Zahnbreite 41 gleich der Ausgangsmaterialbreite 37 ausgeführt ist, ist die Außenverzahnung 35 an einen durchgehenden Materialringbereich 92 in einer Stärke 91 von etwa 40 % der Ausgangsmaterialstärke 37 angebunden sowie, ihn verdickend, ein flacher Materialringbereich 100 in einer Stärke 105 von etwa einem Viertel der Stärke 91, in den gleich tiefe Einprägungen 102 in Form der Zahnköpfe der Außenverzahnung 35, auch lagemäßig, mit ihnen übereinstimmend, vorgesehen sind. Die zwischen den Einprägungen 102 verbleibende hochliegende Partien 97 werden von sie umlaufenden schrägen Anschlußpartien 99 bis zu den Einprägungen 102 mit dem Steg 43 angeschlossen. In den Bereichen zwischen den seitlichen Teilen der schrägen Anschlußpartien 99 sind ebenfalls entsprechend schräg verlaufende Partien 103 vorgesehen, wobei diese beiden Partien 99 und 103 unter einem Winkel γ von je etwa 40° an den Steg 43 mit stärkeren Rundungen 98 allmählich anschließen, so daß insgesamt spannungsspitzenvermeidende Übergänge geschaffen sind.

Das für das volle Ausprägen der Zähne der Außenverzahnung 35 und des Materialringbereiches 100 der schrägen Partien 99 und 103 erforderliche Material wird auch hier neben den zwischen den Zähnen der durchgedrückten Außenverzahnung 35 zur Verfügung stehenden Anteilen von einem freien Kreisringbereich 93 entnommenen Material der einem Durchmesser 101, größer als der Kopfkreis der Außenverzahnung 35, ausgeführt ist, sowie durch die Einprägungen 102 und die weiter vorliegenden Freiräume sowie des Materialanteils der Ringnut 53 auf der Seite der Verzahnung zur Verfügung gestellt. Die Einprägungen 102 können zur Erzielung einer besonders günstigen, spannungsspitzenabbauenden Formgebung auch in einer wellenartigen Form 104 als in der Sohle und bei den oberen Übergängen gerundet ausgeführt sein.

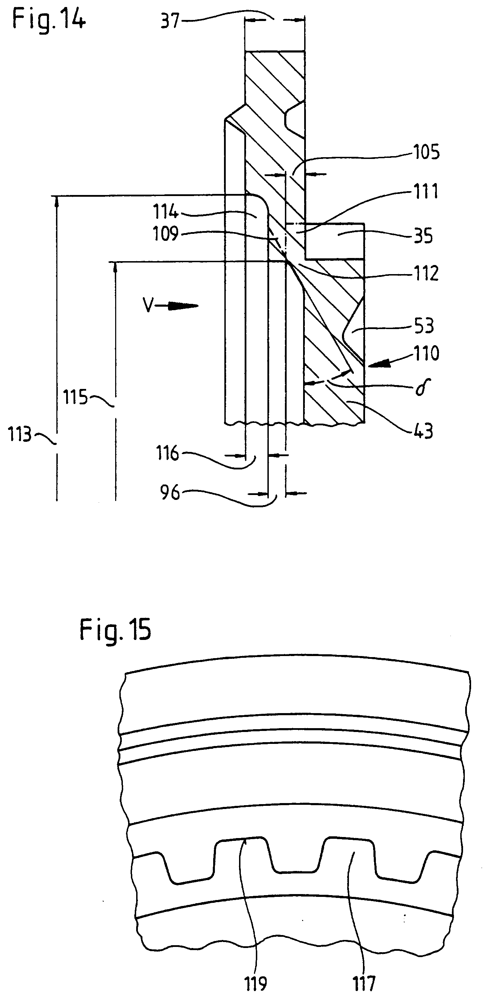

Bei der weiteren erfinderischen Ausführungsvariante eines Ritzels 110 gemäß den Fig. 14 und 15 werden die zum Anschließen der Außenverzahnung 35 in Breite der Ausgangsmaterialstärke 37 an einen geschlossenen Materialringbereich 111 in einer Stärke 105 von mindestens 28 % der Ausgangsmaterialstärke 37, und zur Schaffung eines anschließenden Konusringbereiches 112, der vom Materialringbereich 111 zum Steg 43 flachwinkelig unter einem Winkel δ von etwa 35° verläuft, sowie für einen den Materialringbereich 111 ergänzenden Materialringbereich 109 erforderlichen Materialmengen werden einem freien Kreisringbereich 114 und schrägen Einprägungen 117, die in einer Form 119 entsprechend den Zähnen der Außenverzahnung 35 in den Materialringbereich 109 ebenfalls unter dem Winkel δ eingeprägt sind und die an dem Konusringbereich 112 anschließen, entnommen. Der freie Kreisringbereich 114, geht in einer Stärke 116 mit seinem Durchmesser 113 in seiner Größe im erforderlichen Maß über den Kopfkreis der Außenverzahnung 35 hinaus, wobei der Konusringbereich 112 in einem Durchmesser 115 etwas kleiner als der Fußkreis beginnt. Der Materialringbereich 109 weist eine Stärke 96 von etwa 28 % der Ausgangsmaterialstärke 37 auf.

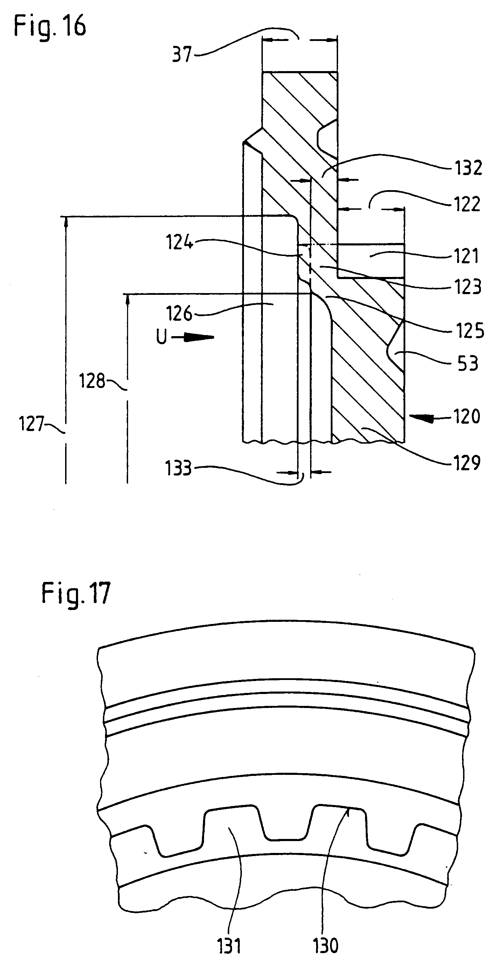

Die erfinderische Ausgestaltung des Ausführungsbeispiels gemäß den Fig. 16 und 17 weist ein Ritzel 120 mit einer Außenverzahnung 121 auf, deren Zahnbreite 122 etwa um 10% kleiner ist als die Ausgangsmaterialbreite 37. Durch einen erzeugten durchgehenden Materialringbereich 123 seitlich der Außenverzahnung 121 etwa in einer Stärke 132 von 40% der Ausgangsmaterialstärke 37, ergänzt durch einen teilweise durchgehenden Materialringbereich 124 in einer Stärke 133 von etwa 25 % der Stärke 126, ist die Außenverzahnung 121 seitlich solide angebunden. An den Materialringbereich 123 schließt sich nach innen ein Konusringbereich 125 mit einem Durchmesser 128 an, auslaufend an den Steg 129. In den Materialringbereich 124 sind flache Einprägungen 131 in seiner Tiefe und in Form 130 sowie Lage der Zähne der Außenverzahnung 121 eingeprägt. Diesen Einprägungen und einem freien in seiner Tiefe sich ergebenden Kreisringbereich 126 mit einem Durchmesser 127 abschließend, der den Kopfkreis der Außenverzahnung 121 überschreitet, sowie durch Eindrücken einer Ringnut 53 auf der Verzahnungsseite wird das Material für die Kreisringbereiche 123 und 124 sowie dem Konusringbereich 125 entnommen. Der hier nicht beschriebene, zugehörige Innenzahnkranz wird in bezug auf die Zahnbreite sinngemäß angepaßt, wobei die schmalere Zahnbreite 122 in Verbindung mit der günstigen Lagerungsausführung sowie der erfinderischen seitlichen Zähneanbindung und entsprechender Werkstoffauswahl nicht leistungsmindernd ist, da die Bruchgefahr für die Zähne bei Überlast kritischer ist als die Flächenpressung auf die Zahnflanken.

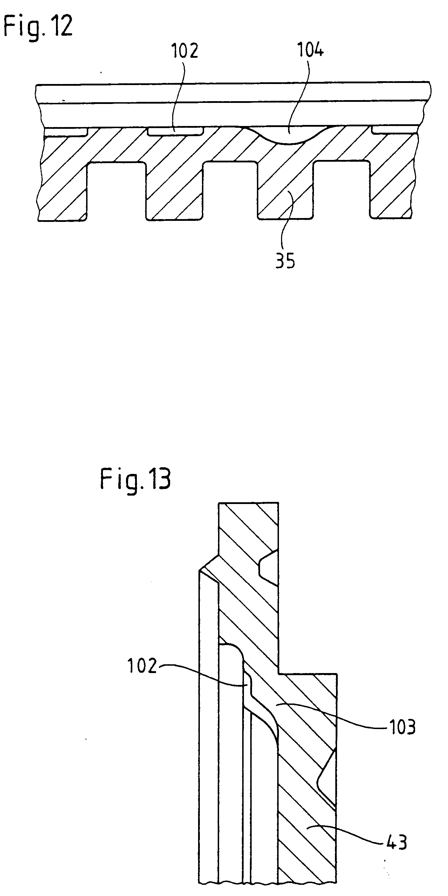

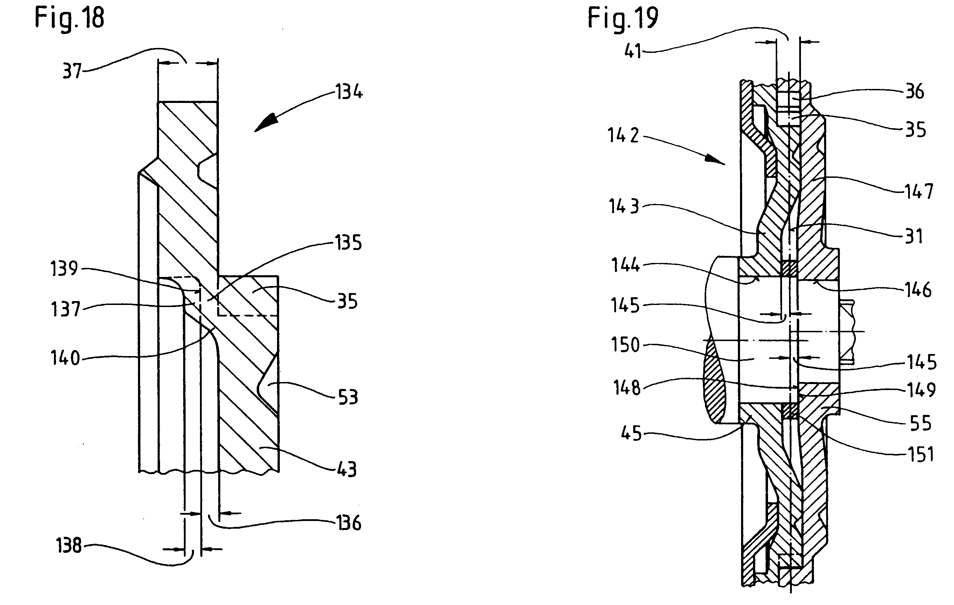

Bei der Ausführung nach Fig. 18 ist bei einem Ritzel 134 die Außenverzahnung 35 seitlich an einen Materialringbereich 135 in einer Stärke 136 ab 28 % der Ausgangsmaterialstärke 37 angebunden. Ihm schließt sich weiter seitlich ein durch Einprägungen unterbrochener Materialringbereich 137, etwa in einer Stärke 138 von etwa 20 % der Ausgangsmaterialbreite 37 deckend im Kreisringbereich der Außenverzahnung 35 an. Die Einprägungen 139 des Materialringbereiches 137 liegen, seitlich betrachtet, mit den Zähnen der Außenverzahnung 35 fluchtend, sie können die Form der Außenverzahnung 35 aufweisen, sie können aber auch in einer gewellten und allseitig abgerundeten Form ähnlich der Form 104 nach Fig. 12 eingedrückt sein. An den Materialringbereich 135 schließt auch hier ein Konusringbereich 140 nach innen an, der für den ersteren einen allmählichen Übergang, zum Steg 43 schafft. Die für die Materialringbereiche 135 und 137 sowie den Konusringbereich 141 erforderlichen Materialanteile werden sinngemäß zu den vorstehend beschriebenen Beispielen zur Verfügung gestellt.

Ein Beispiel eines Gelenkbeschlags 142 mit verbreitert gelagertem Exzenter-Planetengetriebe zeigt Fig. 19, und zwar als Teilschnitt, wobei die nicht dargestellten Teilbereiche denen der Fig. 2 sinngemäß entsprechen. Bei einem Ritzel 143 beginnt ein Exzenterlagerbereich 144, von einer Mitte 31 der Außen- und Innenverzahnung 35 bzw. 36 in einem Abstand 145 von fast einer halben Zahnbreite 41 entfernt liegend. Im gleich großen Abstand 145 beginnt ein zentrischer Lagerbereich 146 eines Innenzahnkranzes 147, von der Mitte 31 entfernt liegend, wobei der Innenzahnkranz 147 mit einer Lagerstirnfläche 148 an einer Lagerstirnfläche 149 der Schwenkachse 150 zur Anlage kommt. Axial nach innen können sich das Ritzel 143 und der Innenzahnkranz 147 gegenseitig durch einen Distanzring 151 mit Lagerungsspiel abstützen. Der Exzenterlagerbereich 144 und der zentrische Lagerbereich 146 sind ebenfalls durch Naben 45 bzw. 55 der Ausgangsmaterialstärke 37 gegenüber verbreitert, ausgeführt. Auch hier ist ein voller innerer Ausgleich der Kippmomente erreicht.

### Gewerbliche Anwendbarkeit

Mit der Erfindung werden Gelenkbeschläge für verstellbare Rückenlehnen - insbesondere für Kraftfahrzeuge - geschaffen, die durch ihre erheblichen Vorteile, insbesondere hinsichtlich der Tragfähigkeit und Belastbarkeit sowie hinsichtlich der Sicherheit und Funktionstüchtigkeit bei gleichzeitig hoher Wirtschaftlichkeit unter Einsparung von Werkzeugkosten eine vielfältige und breite Anwendung auf dem einschlägigen technischen Gebiet gestatten.

## Patentansprüche

1. Gelenkbeschlag für Sitze mit verstellbarer Rückenlehne, insbesondere für Kraftfahrzeuge, bei dem ein dem Sitzteil (2) zugeordneter, fester Gelenkteil (5) und ein mit der Rückenlehne (4) verbundener, schwenkbarer Gelenkteil (7) mittels eines Exzenter-Planetengetriebes eine Neigungsverstellung und Feststelleinrichtung bildet, wobei die Verzahnungen des zugehörigen Ritzels (10) und Innenzahnkranzes (11) durch Ausdrücken mittels eines Kaltfließpreßvorganges erzeugt werden, mit Zahnbreiten etwa gleich der Stärke des Ausgangsmaterials, wobei in den der Verzahnung (35, 36, 72, 78, 121) des Ritzels (10, 67, 110, 120, 134) und des Innenzahnkranzes (11, 76, 137) axial benachbarten Bereichen durchgehende kreisringförmige Materialringbereiche (27, 61, 69, 77, 92, 111, 123, 135) gebildet sind, dadurch gekennzeichnet, daß die Materialringbereiche (27, 61, 69, 77, 92, 111, 123, 135) eine Stärke (51, 54, 59, 73, 91, 105, 132, 136) von mindestens 28 % der Ausgangsmaterialstärke (37) haben, daß an die Materialringbereiche (27, 61, 69, 77, 92, 111, 123, 135) anschließende konusringförmige Materialbereiche (52, 56, 63, 74, 79, 99, 112, 125, 140) an Stege (43, 58, 129) flachwinkelig anschließen, und daß die Lagerstirnflächen (33, 34) des Ritzels (10) und des Innenzahnkranzes (11) auf der Mittelebene (31) der Verzahnung (35, 36) des Ritzels (10) und des Innezahnkranzes oder von der Mittelebene (31) gegenüberliegend jeweils im gleichen Abstand (145) entfernt liegen.

2. Gelenkbeschlag nach Anspruch 1, dadurch gekennzeichnet, daß die Verzahnungsteile (10, 11) entweder als lose Ronden oder einstückig mit den Gelenkbeschlagteilen ausgebildet sind.

3. Gelenkbeschlag nach Anspruch 1 oder 2, dadurch gekennzeichnet, daß die Materialanteile der Stege (43, 58, 129) sowohl von denen zwischen den durchgedrückten Verzahnungen (35, 36, 72, 78, 121) anderseitig vorliegenden Zahnlücken ganz oder teilweise als auch von zu den Verzahnungen (35, 36, 72, 78, 121) auf der entgegengesetzten Seite eingedrückten freien Kreisringbereichen (49, 71, 93, 114, 126) gebildet sind bzw. zusätzlich von auf den Verzahnungsseiten oder gegenüberliegend eingedrückten Ringnuten (53, 60, 62) sowie Einprägungen (102, 104, 131, 139) zur Verfügung gestellt werden.

4. Gelenkbeschlag nach einem der Ansprüche 1 bis 3, dadurch gekennzeichnet, daß die Zahnbreite (41) etwa gleich der Ausgangsmaterialstärke (37) oder die Zahnbreite (68, 122) etwa 10 % größer bzw. kleiner als die Ausgangsmaterialstärke (37) ist.

5. Gelenkbeschlag nach einem der Ansprüche 1 bis 4, dadurch gekennzeichnet, daß die Exzenterlagerbereiche (14, 15) der Ritzel (10, 67, 90, 110, 120, 134) und der Gelenkteile (83, 86) sowie der Innenzahnkränze (11, 76, 137) mit Naben (45, 55) ausgeführt sind, die in ihrer Länge mindestens auf das 1,6-fache der Ausgangsmaterialstärke (37) verbreitert sind.

6. Gelenkbeschlag nach einem der Ansprüche 1 bis 5, dadurch gekennzeichnet, daß bei einen Ritzel (10) und einem Innenzahnkranz (11) die Stärken (51, 59) der Materialringbereiche (27, 61) ab 35 % der Ausgangsmaterialstärke (37) ausgeführt sind und der anschließende Konusringbereich (52) unter einem Winkel (α) von etwa 30° an den Steg (43) anschließt sowie der Konusringbereich (63) unter einem Winkel von 30 bis 45° zum Steg (58) allmählich verlaufend ausgeführt ist.

7. Gelenkbeschlag nach einem der Ansprüche 1 bis 5, dadurch gekennzeichnet, daß bei einem Ritzel (90) der Materialringbereich (92) in einer Stärke (91) von etwa 40 % der Ausgangsmaterialstärke (37) bei einem Außendurchmesser (101) größer als der Kopfkreisdurchmesser der Außenverzahnung (35) in den Anschlußbereich (44) übergeht, sich ein Materialringbereich (100) seitlich anschließt, in dem gegenüberliegend zu den Zahnprofilen der Außenverzahnung (35) etwa in ihrem Profil Einprägungen (102) parallel bis auf den Materialringbereich (92) eingedrückt sind, wobei umlaufende Konusringbereiche (99) die verbleibenden hochliegenden Partien (97), bis zum Steg (43) allmählich anschließend umgeben und nach innen im Anschluß an die Einprägungen (102) schräge Partien (103) als Übergänge zum Steg (43) bestehen, und die Konusringbereiche (99) sowie Partien (103) unter einem Winkel (γ) von etwa 40° zum Steg (43) verlaufen.

8. Gelenkbeschlag nach einem der Ansprüche 1 bis 5, dadurch gekennzeichnet, daß sich bei einem Ritzel (110) an den Materialringbereich (111) etwa in einer Stärke (105) von mindestens 28 % der Ausgangsmaterialstärke (37) seitlich ein Materialringbereich (109) in einer Stärke (96) von etwa 28 % der Ausgangsmaterialstärke (37) und nach innen ein Konusringbereich (112) anschließt, der unter einem Winkel (δ) von etwa 35° an den Steg (43) führt, wobei in letzteren schräge Einprägungen (117), der Verzahnung (35) gegenüberliegend und in ihrer Form unter dem Winkel (δ), eingedrückt sind, sowie außen ein freier Kreisringbereich (114) mit einem Durchmesser (113) größer als der Kopfkreis der Außenverzahnung (35) vorgesehen ist.

9. Gelenkbeschlag nach einem der Ansprüche 1 bis 5, dadurch gekennzeichnet, daß sich bei einem Ritzel (120) an den Materialringbereich (123) in einer Stärke (132) von 40 % und mehr der Ausgangsmaterialstärke (37) und einem inneren Durchmesser (128) kleiner als der Fußkreis der Außenverzahnung (121) seitlich ein Materialringbereich (124) in einer Stärke (133) von etwa 25 % der Ausgangsmaterialstärke (37) mit einem Durchmesser (127) größer als der Kopfkreis anschließt, wobei in diesem Materialringbereich (124) flache Einprägungen (131) in Form und Lage der Zähne der Außenverzahnung (121) eingedrückt sind.

10. Gelenkbeschlag nach einem der Ansprüche 1 bis 5, dadurch gekennzeichnet, daß bei einem Ritzel (134) seitlich an den Materialringbereich (135) in einer Stärke (136) ab 28 % der Ausgangsmaterialstärke (37) in einer Stärke ab 20 % der Ausgangsmaterialstärke (37) ein durch Einprägungen (139) unterbrochener Materialringbereich (137) anschließt, wobei die Einprägungen (139) in ihrer Form und Lage den Zähnen der Außenverzahnung (35) entsprechen oder diese eine abgerundete Form aufweisen.

11. Gelenkbeschlag nach einem der Ansprüche 1 bis 10, dadurch gekennzeichnet, daß die Ecken und Kanten der Ritzel, Ritzel- und Innenzahnkranzbereiche (81, 84) sowie Innenzahnkränze (11, 76, 137) beiderseits der Bereiche der Verzahnungen (35, 36, 72, 78, 121) abgerundet oder mit Fasen (16) im Winkel von etwa 15° ausgeführt sind.

12. Gelenkbeschlag nach einem der Ansprüche 1 bis 11, dadurch gekennzeichnet, daß das Ritzel (10) und der Innenzahnkranz (11) als Ronde in stärkerer Ausgangsmaterialstärke (37) ausgebildet sind, vorzugsweise 3,5 mm, und mit einem festen Gelenkteil (17) bzw. mit einem schwenkbaren Gelenkteil (23) in geringerer Materialstärke (38), vorzugsweise etwa 1,8 mm, fest durch Schweißung, Nietung, Schraubung verbunden sind, und daß an den Gelenkteilen (17, 23) jeweils Führungsbleche (21, 26) fest angeordnet sind, die am Innenzahnkranz (11) mit dem schwenkbaren Gelenkteil (23) bzw. am Ritzel (10) mit dem festen Gelenkteil (17) mit ihren Segmentbereichen (20 bzw. 22) stirnseitig mit Laufspiel zur Anlage kommen.

13. Gelenkbeschlag nach einem der Ansprüche 1 bis 12, dadurch gekennzeichnet, daß das lose Ritzel (10, 67, 90, 110, 120, 125) und der lose Innenzahnkranz (11, 76) stirnseitig in ihren Anschlußbereichen (44, 57) an den der Verzahnungen (35, 36, 72, 121) entgegengesetzten Seite mit Schweißringen (46) mit spitzen dreieckigen oder abgerundeten Querschnitten versehen sind.

14. Gelenkbeschlag nach einem der Ansprüche 1 bis 13, dadurch gekennzeichnet, daß ein Ritzelbereich (81) und ein Innenzahnkranzbereich (84), deren Verzahnungen (35, 36) sowie Stege und Lagerungsverhältnisse dem Ritzel (10) und dem Innenzahnkranz (11) entsprechen, mit einem festen Gelenkteil (83) bzw. einem schwenkbaren Gelenkteil (86) jeweils einstückig ausgebildet sind, und mit den Gelenkteilen (83, 86) jeweils eine oder zwei Führungsbolzen (87) angeordnet sind, die mit der Innenseite ihres Kopfes spielarm dem jeweils anderen Gelenkteil in ihrem Anschlußbereich gegenüberliegenden, mit zentrischer Außenkontur ausgebildeten Bereich (88) überdeckend zugeordnet sind oder daß anstelle der Führungsbolzen Führungsbleche (21, 26) verwendet werden.

15. Gelenkbeschlag nach einem der Ansprüche 1 bis 14, dadurch gekennzeichnet, daß sich zwischen den Lagerstirnflächen (148, 139) des Ritzels (143) und des Innenzahnkranzes (147) ein Distanzring (151) mit Lagerungsspiel befindet.

## Claims

1. Hinge mounting for seats with adjustable backrests, particularly for motor vehicles, in which a fixed hinge member (5) associated with the seat proper (2) and a pivotable hinge member (7) associated with the backrest (4) form, by means of an eccentric planetary gear, an inclination adjustment and securing device, wherein the pinion (10) and internal gear (11) associated with the tooth system are made by a cold extrusion moulding process and have a tooth width about the same as the thickness of the starting material and wherein in the areas axially adjacent the tooth systems (35, 36, 72, 78, 121) of the pinion (10, 67, 110, 120, 134) and the internal gear (11, 76, 137) continuous annular regions of material (27, 61, 69, 77, 92, 111, 123, 135) are formed, characterised in that the continuous annular regions of material (27, 61, 69, 77, 92, 111, 123, 135) have thicknesses (51, 54, 59, 73, 91, 105, 132, 136) of at least 28% of the thickness (37) of the starting material and that adjoining annular conical regions (52, 56, 63, 79, 112, 125, 140) adjoin bridges (43, 58, 129) at a low angle, and in that the centre (31) of the two tooth systems (35, 36) is in the same plane as bearing faces (33, 34) of the pinion (10) and of the internal gear (11) or bearing faces lie opposing at the same distance (145) from the centre (31).

2. Hinge mounting according to claim 1, characterised in that the parts of the tooth system are either in the form of loose circular plates or integral with the members of the hinge mounting.

3. Hinge mounting according to claim 1 or 2, characterised in that the material of the bridges (43, 58, 129) being wholly or partly made available both from the tooth gaps on the other side between the pressed-through tooth systems (35, 36, 72, 78, 121) and from free annular circular regions (49, 71, 93, 114, 126) pressed in on the opposite side to the tooth systems (35, 36, 72, 78, 121) and/or in addition from annular grooves (53, 60, 62) and indentations (102, 104, 131, 139) pressed in on the tooth system side or the opposite side.

4. Hinge mounting according to one of claims 1 to 3, characterised in that the tooth width (41) is about the same as the thickness (37) of the starting material or the tooth width (68, 122) is about 10% greater or smaller than the thickness (37) of the starting material.

5. Hinge mounting according to one of claims 1 to 4, characterised in that the eccentric bearing regions (14, 15) of the pinion (10, 67, 90, 110, 120, 134) and of the hinge members (83, 86) and of the internal gear (11, 76, 137) are provided with hubs (45, 55) the length of which has been increased to at least 1.6 times the thickness (37) of the starting material.

6. Hinge mounting according to one of claims 1 to 5, characterised in that in the case of a pinion (10) and an internal gear (11) the thicknesses (51, 59) of the annular material regions (27, 61) are made from 35% of the thickness (37) of the starting material and the adjoining annular conical region (52) adjoins the bridge (43) at an angle (α) of about 30° and the conical annular region (63) runs gradually into the bridge (58) at an angle of 30 to 45°.

7. Hinge mounting according to one of claims 1 to 5, characterised in that in the case of a pinion (90) the annular material region (92) with a thickness of about 40% of the thickness (37) of the starting material passes into the connection region (44) at an external diameter (101) greater than the tip circle diameter of the external gear system (35), there is a laterally adjoining annular material region (100) in which, opposite the tooth profiles of the external tooth system, indentations (102) having about the same profile as these are pressed parallel as far as the annular material region (92), with surrounding conical annular regions (98) surrounding and gradually adjoining the remaining raised portions (97) as far as the bridge (43), and inwardly, connected to the indentations (102), there are sloping portions (103) forming a transition to the bridge (43), the conical annular regions (98) and the portions (103) lying at an angle (γ) of about 40° to the bridge (43).

8. Hinge mounting according to one of claims 1 to 5, characterised in that in the case of a pinion (110) the annular material region (111) has a thickness (105) of at least 28% of the thickness (37) of the starting material and is adjoined laterally by an annular material region (109) with a thickness (105) of about 28% of the thickness (37) of the starting material and inwardly by a conical annular region (112) which leads to the bridge (43) at an angle (δ) of about 35°, with sloping indentations (117) being pressed into said bridge opposite to and in the shape of the tooth system (35) at the angle (δ) and with a free circular annular region (114) having a diameter (113) greater than that of the tip circle of the external tooth system (35) being provided outside.

9. Hinge mounting according to one of claims 1 to 5, characterised in that in the case of a pinion (120) the annular material region (123) has a thickness (132) of 40% or more of the thickness (37) of the starting material and an internal diameter (128) smaller than that of the root circle of the external tooth system (121) and is adjoined laterally by an annular material region (124) having a thickness (133) of about 25% of the thickness (37) of the starting material and a diameter (127) greater than that of the tip circle, this annular material region (124) having impressed therein flat indentations (131) having the shape and position of the teeth oft the external tooth system (121).

10. Hinge mounting according to one of claims 1 to 5, characterised in that in the case of a pinion (134) the annular material region (135) has a thickness (136) of from 28% of the thickness (37) of the starting material and is adjoined by an annular material region (137) that has a thickness of from 20% of the thickness (37) of the starting material and is interrupted by indentations (139), said indentations (139) corresponding in shape and position to the teeth of the external tooth system (35) or having a rounded-off shape.

11. Hinge mounting according to one of claims 1 to 10, characterised in that the corners and edges of the pinions, the pinion and internal gear regions (81, 84) and the internal gears (11, 76, 137) on both sides of the regions of the tooth systems (35, 36, 72, 78, 121) are rounded-off or are provided with chamfers (16) at an angle of about 15°.

12. Hinge mounting according to one of claims 1 to 11, characterised in that the pinion (10) and the internal gear (11) are in the form of circular plates of starting material of fairly large thickness (37), preferably 3.5 mm, and are joined firmly to a fixed hinge member (17) or to a pivotable hinge member (23) of smaller thickness (38), preferably about 1.8 mm, by welding, riveting, or screwing, and in that guide plates (21, 26) are fixed to the respective hinge members (17, 23) with their segment regions (20 and 22 respectively) in face contact, with running clearance, with the internal gear (11) in the case of the pivotable hinge member (23) and with the pinion (10) in the case of the fixed hinge member (17).

13. Hinge mounting according to one of claims 1 to 12, characterised in that the loose pinion (10, 67, 90, 110, 120, 125) and the loose internal gear (11, 76) are provided on their faces in their connecting regions (44, 57), on the side opposite the tooth systems (35, 36, 72, 121), with welding rings (46) having with pointed triangular or rounded sections.

14. Hinge mounting according to one of claims 1 to 13, characterised in that a pinion region (81) and an internal gear region (84) of which the tooth systems (35, 36), the bridges and the bearing relationships correspond to the pinion (10) and the internal gear (11), are respectively formed integrally with a fixed hinge member (83) and a pivotable hinge member (86), and that each oft the hinge members (83, 86) is provided with one or two guide bolts (87) of which the inside of the heads are overlappingly associated, with slight clearance, with the region (88) formed with a central outside contour, opposite the connecting region of the respective other hinge member, or that guide plates (21, 26) are used instead of the guide bolts.

15. Hinge mounting according to one of claims 1 to 14, characterised in that a distance ring (151) is located with bearing clearance between the bearing faces (148, 139), of the pinion (143) and the internal gear (147).

## Revendications

1. Articulation pour sièges avec dossier réglable, en particulier pour véhicules automobiles, pour laquelle une partie articulation (5) rigide, associée à la partie assise (2), et une partie articulation (7) pivotante, reliée au dossier (4), constituent au moyen d'un jeu d'engrenages planétaires excentrique, un réglage d'inclinaison et un dispositif de blocage de position, les dentures du pignon (10) afférent et de la couronne à denture intérieure (11) étant produites par refoulement ou moyen d'un processus de pressage à fluage à froid, avec des largeurs de dent à peu près égales à l'épaisseur du matériau initial, des zones annulaires de matériau (27, 61, 69, 77, 92, 111, 123, 135) en forme d'anneaux de cercle, continues, étant constituées dans les zones voisines axialement de la denture (35, 36, 72, 78, 121) du pignon (10, 67, 110, 120, 134) et de la couronne à denture intérieure (11, 76, 137), caractérisée en ce que les zones annulaires de matière (27, 61, 69, 77, 92, 111, 123, 135) ont une épaisseur (51, 54, 59, 73, 91, 105, 132, 136) d'au moins 28 % de l'épaisseur initiale (37) de la matière, en ce qu'aux zones annulaires de matière (27, 61, 69, 77, 92, 111, 123, 135) se raccordent, en faisant un angle plat, au niveau des âmes (43, 58, 129) des zones de matière (52, 56, 63, 74, 79, 99, 112, 125, 140) en forme d'anneaux coniques et en ce que les faces frontales de tourillonnement (33, 34) du pignon (10) et de la couronne à denture intérieure (11), dans le plan médian (31) de la denture (35, 36) du pignon (10) et de la couronne à denture intérieure ou du plan médian (31), sont éloignées de la même distance (115) en étant respectivement opposées.

2. Articulation selon la revendication 1, caractérisée en ce que les parties de denture (10, 11) sont, soit des flans circulaires, indépendants, soit sont réalisés d'un seul tenant avec les parties d'articulation ou de ferrure d'articulation.

3. Articulation selon la revendication 1 ou 2, caractérisée en ce que les proportions en matière des âmes (43, 58, 129) sont totalement ou partiellement constituées tant par les entredents se trouvant de l'aute côté et situés entre les dentures (35, 36, 72, 78, 121) obtenues par pressage, que par des zones en anneaux de cercle (49, 71, 93, 114, 126) libres, creusées par le refoulement sur le côté opposé aux dentures (35, 36, 72, 78, 121), respectivement sont en plus fournies par des gorges annulaires (53, 60, 62) obtenues par le refoulement et situées du côté de la denture ou bien du côté opposé, ainsi que par des empreintes (102, 104, 131, 139).

4. Articulation selon l'une des revendications 1 à 3, caractérisée en ce que la largeur de dent (41) est à peu près égale à l'épaisseur initiale (37) du matériau ou bien la largeur de dent (68), respectivement (122), est d'environ 10 % supérieure ou inférieure à l'épaisseur initiale (37) du matériau.

5. Articulation selon l'une des revendications 1 à 4, caractérisée en ce que les zones de tourillonnement excentrique (14, 15) des pignons (10, 67, 90, 110, 120, 134) et des parties d'articulation (83, 86) ainsi que des couronnes à denture intérieure (11, 76, 137) sont réalisées avec des moyeux (45, 55), qui sont élargis dans leur longueur au moins à 1,6 fois l'épaisseur initiale (37) du matériau.

6. Articulation selon l'une des revendications 1 à 5, caractérisée en ce que, pour un pignon (10) et une couronne à denture intérieure (11), les épaisseurs (51, 59) des zones annulaires de matériau (27, 61) sont réalisées à partir de 35 % de l'épaisseur initiale (37) du matériau et la zone d'anneau conique (52) s'y raccordant se raccorde à l'âme (43) en faisant un angle (α) d'environ 30° et la zone en anneau conique (63) est réalisée progressivement et continuement vis-à-vis de l'âme (58) sous un angle compris dans la plage allant de 30 à 45°.

7. Articulation selon l'une des revendications 1 à 5, caractérisée en ce que pour un pignon (90) la zone annulaire (92) de matériau se transforme avec une épaisseur (91) d'environ 40 % de l'épaisseur initiale (37) du matériau et pour un diamètre extérieur (101) supérieur au diamètre du cercle de tête de la denture extérieure (35), en la zone de raccordement (44), une zone annulaire (100) de matériau se raccordant latéralement, zone dans laquelle sont imprimés à l'opposé des profils de denture de la denture extérieure (35), des enfoncements (102) ayant à peu près leur profil, l'enfoncement se faisant parallèlement jusqu'à la zone annulaire (92) de matériau, des zones annulaires coniques (99) de pourtour entourant les parties (97) relevées subsistantes jusqu'à l'âme (43), de façon progressive et en s'y raccordant, et des parties (103) obliques, orientées vers l'intérieur et se raccordant aux enfoncements (102), formant des transitions vers l'âme (43) et les zones annulaires coniques (99), ainsi que les parties (103), s'étendant sous un angle (γ) d'environ 40° par rapport à l'âme (43).

8. Articulation selon l'une des revendications 1 à 5, caractérisée en ce qu'au niveau d'un pignon (110) se raccordent à la zone annulaire de matériau (111) avec à peu près une épaisseur (10b) d'au moins 28 % de l'épaisseur initiale (37) du matériau, latéralement, une zone annulaire de matériau (109) ayant une épaisseur (96) d'environ 28 % de l'épaisseur initiale (37) du matériau et, vers l'intérieur, une zone annulaire conique (112), qui s'étend vers l'âme (43) avec un angle (β) d'environ 35°, des enfoncements (117) obliques, opposés à la denture (35), étant réalisés dans celle-ci par refoulement et selon sa forme, avec un angle (δ), et une zone annulaire circulaire (114) libre ayant extérieurement un diamètre (113) supérieur à celui du cercle de tête de la denture extérieure (35).

9. Articulation selon l'une des revendications 1 à 5, caractérisée en ce qu'au niveau d'un pignon (120) se raccorde à la zone annulaire de matière (123), avec une épaisseur (132) de 40 % et plus de l'épaisseur initiale (37) du matériau et avec un diamètre intérieur (128) inférieur à celui du cercle du pied de la denture extérieure (121), latéralement, une zone annulaire de matériau (124) ayant une épaisseur (133) d'environ 25 % de l'épaisseur initiale (37) du matériau avec un diamètre (127) supérieur à celui du cercle de tête, des empreintes (131) plates se présentant sous la forme et à la position des dents de la denture extérieure (121) étant creusées par refoulement dans cette zone annulaire de matériau (124).

10. Articulation selon l'une des revendications 1 à 5, caractérisée en ce qu'au niveau d'un pignon (134) se raccorde à une zone annulaire de matériau (135) avec, latéralement, une zone annulaire de matériau (137) avec une épaisseur (136) à partir de 28 % de l'épaisseur initiale (37) du matériau, interrompue par des empreintes (139), avec une épaisseur partant de 20 % de l'épaisseur initiale (37) du matériau, les empreintes (139) correspondant pour leur forme et leur position aux dents de la denture extérieure (35), ou bien celles-ci présentant une forme arrondie, interrompue par des empreintes (139)

11. Articulation selon l'une des revendications 1 à 10, caractérisée en ce que les angles et les arêtes des pignons, des zones de pignon et de couronne à denture intérieure (81, 84) ainsi que les couronnes à denture intérieure (11, 76, 137) sont réalisés de part et d'autre des zones des dentures (35, 36, 72, 78, 121) de façon arrondie ou bien avec des chanfreins (16) d'un angle d'environ 15°.

12. Articulation selon l'une des revendications 1 à 11, caractérisée en ce que le pignon (10) et la couronne à denture intérieure (11) sont réalisés sous forme de flans circulaires ayant une épaisseur initiale de matériau (37) plus forte, de préférence de 3,5 mm, et avec une partie d'articulation (17) rigide, respectivement avec une partie d'articulation (23) pivotante ayant une épaisseur de matériau (38) moindre, de préférence d'environ 1,8 mm, en étant reliés rigidement par soudure, rivetage, vissage, et en ce que sur les parties d'articulation (17, 23) sont disposées respectivement rigidement des tôles de guidage (21, 26), qui viennent en appui frontal avec la partie d'articulation (23) pivotante, respectivement sur le pignon (10) avec la partie d'articulation (17) rigide, par leurs zones de segment (20, respectivement 22), en laissant subsister un jeu.

13. Articulation selon l'une des revendications 1 à 12, caractérisée en ce que le pignon (10, 67, 90, 110, 120, 125) fou et la couronne à denture intérieure (11, 76) folle sont pourvus frontalement, dans leurs zones de raccordement (44, 57), sur la face opposée aux dentures (35, 36, 72, 121), d'anneaux de soudage (46) ayant des sections transversales triangulaires, pointues ou arrondies.

14. Articulation selon l'une des revendications 1 à 13, caractérisée en ce qu'une zone de pignon (81) et une zone de couronne à denture intérieure (84), dont les dentures (35, 36) ainsi que les âmes et les conditions de tourillonnement correspondent à celles du pignon (10) et de la couronne à denture intérieure (11), sont réalisées respectivement d'un seul tenant avec une partie d'articulation (83) rigide, respectivement une partie d'articulation (86) pivotante, et un ou deux axes ou boulons de guidage (87) étant respectivement disposés avec chacune des parties d'articulation (83, 86), ces axes ou boulons étant placés en opposition de l'autre partie d'articulation leur étant chaque fois associée dans leur zone de raccordement avec la face intérieure de leur tête, avec peu de jeu, en se chevauchant avec une zone (88) à contour extérieur centré ou bien en ce que, au lieu dos boulons de guidage, on utilise des tôles de guidage (21, 26).

15. Articulation selon l'une des revendications 1 à 14, caractérisée en ce qu'entre les faces frontales de tourillonnement (148, 139) du pignon (143) et la couronne à denture intérieure (147) se trouve une bague d'espacement (151) ayant un jeu de tourillonnement.
